# EUROPEAN PATENT APPLICATION

(11) **EP 3 406 169 A1**
(43) Date of publication of application: **28.11.2018**
(21) Application number: 18178137.8
(22) Date of filing: 07.08.2015
(51) Int. Cl.: A47J 37/07, A47J 37/06

(54) **ELECTRIC GRILL APPLIANCE**

(62) Divisional of application: 15180214.7
(71) Applicant: Electrolux Professional S.p.A., 33170 Pordenone (IT)
(72) Inventor: CAUCCI, Flavio, 33170 Pordenone (IT); TAYFUNOVA, Olena, 33170 Pordenone (IT)
(74) Representative: Electrolux Group Patents

(57) **Abstract**

The present invention is related to an electric grill appliance (1) comprising: a grill structure (2, 7) arranged substantially horizontally to support the foodstuff to be cooked; a heating unit (3, 11) which extends underneath the grill structure (2, 7) and is arranged for heating up the grill structure (2, 7) and the foodstuff resting on it; a catchment tub (17) which is arranged underneath the heating unit (3, 11), substantially vertically aligned to the grill structure (2, 7), so as to collect the liquid tickling down from the grill structure (2, 7) during cooking, said catchment tub (17) being arranged to be at last partially filled with water; and an overflow fitting (23) which is capable of draining out of said catchment tub (17) any liquid accumulating into the catchment tub (17) and exceeding a predetermined maximum level.

## Description

The present invention relates to an electric grill appliance.

More in particular, the present invention relates to a professional electric grill appliance for cooking meat and other foodstuff both by heat conduction and radiation, use to which the following description refers purely by way of example without this implying any loss of generality.

As is known, today's professional electric grill appliances basically comprise: a roughly parallelepiped-shaped, outer boxlike casing which is typically structured for resting on a generic worktop; a roughly rectangular or square shaped, typically platelike, grill structure which is arranged horizontally within a complementary-shaped opening formed on top wall of the casing; a coil-shaped resistor which extends horizontally inside the casing immediately underneath the grill structure, and is capable of heating up the grill structure and the foodstuff resting on it; a roughly parallelepiped-shaped, catchment tub, fillable with water, which is located inside the casing, vertically aligned to the grill structure and underneath the coil-shaped resistor, so as to collect any liquid tickling down from the grill structure during cooking; and a control unit which is located inside the boxlike casing and is capable of selectively powering the coil-shaped resistor.

Usually the electric grill appliances referred above additionally comprise a number of heat-reflecting straight longitudinal members which extend parallel to the overlying straight segments of the coil-shaped resistor, and are arranged evenly distributed on a same horizontal reference plane located underneath the coil-shaped resistor, so as to redirect, back towards the grill structure, the heat radiations emitted by the resistor and directed towards the bottom of the catchment tub, thus to improve cooking efficiency.

The main drawback of this type of grill appliances is that, during cooking, the temperature of the coil-shaped resistor is generally above 400 °C and the drops of fat that normally trickle down from the grill structure sometimes get in touch with the coil-shaped resistor and immediately burn up, with all problems (e.g. smoke, bad smells, etc.) that this entails. The sudden burn up of the fat may also happen when the drops of fat reach any one of the heat-reflecting straight longitudinal members beneath the resistor.

To solve this problem, DE4306845A1 discloses an electric grill appliance wherein each straight segment of the coil-shaped resistor is parallel and vertically aligned to a respective straight longitudinal member of the overlying grill structure, whereas each longitudinal member of the grill structure is substantially ridge-tile shaped so as to shelter the beneath-located straight segment of the coil-shaped resistor. Similarly each heat-reflecting longitudinal member is vertically aligned to a respective straight segment of the coil-shaped resistor. DE4306845A1 also shows a catchment tub, positioned below the heat-reflecting longitudinal members, which can be filled with water to collect and cool down the liquid tickling down from the grill during cooking.

Unfortunately this particular layout of resistor and heat-reflecting longitudinal members causes a highly irregular distribution of the heat on the grill structure which may cause uneven cooking of the meat or other foodstuff, with all problems that this entails.

In addition cited prior art has the problem that if too much water is filled in the catchment tub, it could cover the heat-reflecting longitudinal members and or the resistor, which can negatively affect their functioning and performances. This problem is increased by the fact that liquid and possible pieces of food falling from the grid into the tub may cause the water level to rise.

Aim of the present invention is therefore to provide an electric grill appliance having improved performances.

Within this aim, an object of the invention is providing an electric grill appliance having an even distribution of the heat on top of the grill structure, thus to perform optimal grilling of meat and other foodstuff.

Another object of the invention is providing an electric grill appliance having an improved efficiency.

Another object of the invention is providing an electric grill appliance in which the risk that water contained in the catchment tub could negatively affect the performances of the resistor and, if present, of the heat-reflecting members, is highly reduced.

In compliance with the above aim, according to the present invention there is provided an electric grill appliance comprising: a grill structure arranged substantially horizontally to support the foodstuff to be cooked; a heating unit which extends underneath the grill structure and is arranged for heating up the grill structure and the foodstuff resting on it; and a heat-reflecting structure which extends spaced apart underneath the heating unit and is arranged for redirecting, towards the overlying grill structure, the heat radiations emitted by the heating unit.

The grill structure comprises a number (i.e. two or more) of main longitudinal members which are arranged substantially parallel, juxtaposed and laterally spaced (or laterally separated, not laterally in contact, laterally spaced apart) one another; the heating unit comprises a number of oblong heating elements which are arranged substantially parallel, juxtaposed and laterally spaced (or laterally separated, not laterally in contact, laterally spaced apart) one another, below and substantially parallel to the main longitudinal members of said grill structure.

The heat-reflecting structure comprises a number of heat-reflecting longitudinal members which are arranged substantially parallel, juxtaposed and laterally spaced (or laterally separated, not laterally in contact, laterally spaced apart) one another, below and substantially parallel to said oblong heating elements.

At least two horizontally-adjacent oblong heating elements of the heating unit extend immediately below and parallel respectively to two corresponding main longitudinal members of the grill structure, each of said two corresponding main longitudinal members being substantially ridge-tile shaped and being arranged to shelter, at same time, an upper side and two opposite lateral sides of the underlying oblong heating element. Said at least two horizontally-adjacent oblong heating elements are vertically aligned above a single heat-reflecting longitudinal member which is structured to redirect at least part of the heat radiations coming from said, overlying, at least two horizontally-adjacent oblong heating elements, towards a longitudinal slot laterally delimited by the two main longitudinal members of the grill structure placed immediately above said at least two horizontally-adjacent oblong heating elements.

It has been observed that by providing above a single heat-reflecting longitudinal member two or more horizontally-adjacent oblong heating elements, the overall amount of heat reflected by the heat-reflecting longitudinal members towards the food placed on the grill structure is higher than in the prior art solutions, in which each heat-reflecting longitudinal member is positioned below a single oblong heating element; so the claimed invention increases the overall heating efficiency of the electric grill appliance.

Preferably, the main longitudinal members placed immediately above said at least two horizontally-adjacent oblong heating elements have each a substantially U-shaped cross-section, with the concavity facing the heating unit, so as to define a longitudinal cavity or groove, wherein each of said at least two horizontally-adjacent oblong heating elements extends inside the longitudinal cavity or groove of the corresponding longitudinal member.

Preferably, the grill structure comprises at least one transversal crosspiece rigidly connecting the main longitudinal members to one another.

Preferably, the main longitudinal members of said grill structure are substantially evenly distributed, so that the spacing pitch between two adjacent main longitudinal members ranges between 5 and 25 mm.

Preferably, the minimum width of the longitudinal slot laterally delimited by the sidewalls of two adjacent main longitudinal members of said grill structure ranges between 1 and 15 mm, and is preferably equal to roughly 5 mm.

Preferably, the minimum width of the main longitudinal members of said grill structure is greater than twice the width of the longitudinal slots laterally delimited by two adjacent main longitudinal members.

Preferably, each of said at least two horizontally-adjacent oblong heating elements extends inside the longitudinal cavity or groove of the corresponding main longitudinal member of said grill structure while remaining at a minimum distance from the inner surface of the main longitudinal member greater than 0,5 mm and preferably equal to or greater than 1,4 mm.

Preferably, the heating unit comprises at least one, coil-shaped resistor which is provided with a number of reciprocally-parallel straight segments; each of said at least two horizontally-adjacent oblong heating elements being a respective straight segment of said coil-shaped resistor.

Preferably, the minimum distance between said heat-reflecting longitudinal member and the laying plane of said at least two horizontally-adjacent oblong heating elements ranges between 10 and 200 mm, and is preferably equal to roughly 25 mm.

Preferably, said heat-reflecting longitudinal member has a substantially V-shaped cross-section, with its longitudinal bend or ridgeline facing said at least two horizontally-adjacent oblong heating elements.

Preferably, the groove angle between the two side wings/flaps of said substantially V-shaped, heat-reflecting longitudinal member ranges between 30° and 120° and is preferably equal to roughly 95°.

Preferably, the width of the heat-reflecting longitudinal member is at least three times greater than the spacing pitch between two adjacent main longitudinal members of said grill structure.

Preferably, said electric grill appliance additionally comprises a catchment tub which is arranged underneath the heat-reflecting structure, substantially vertically aligned to the grill structure, so as to collect the liquid tickling down from the grill structure during cooking, and which is arranged to be at least partially filled with water.

Preferably, said catchment tub is designed/dimensioned to accommodate the grill structure, the heating unit and the heat-reflecting structure.

Preferably, said electric grill appliance additionally comprises an overflow fitting which is capable of draining out of said catchment tub any liquid accumulating into the catchment tub and exceeding a predetermined maximum level.

Advantageously the predetermined maximum level is a level below the heating unit. The overflow fitting avoids that water contained in the catchment tub could cover the heating unit and negatively affect its performances, and therefore ensures high performances of the electric grill appliance.

More preferably the predetermined maximum level is a level below the heat-reflecting structure; in this case the overflow fitting avoids that water contained in the catchment tub could cover the heat-reflecting structure and negatively affect its performances, and therefore ensures high performances of the electric grill appliance.

Preferably, said overflow fitting is capable of retaining any solid piece having relevant dimensions.

Preferably, said overflow fitting comprises a tubular extension which extends substantially vertically inside or beside the catchment tub and moreover communicates with the inside of said catchment tub at a given height above the bottom of said catchment tub, so that solely the liquid above the upper mouth of said tubular extension is allowed to fall into the same tubular extension.

In another advantageous embodiment, the tubular wall of tubular extension has, preferably close to the upper rim, one or more transversal pass-through holes, which are preferably roughly coplanar one another, and are more preferably evenly distributed around a longitudinal axis of the tubular extension. Thus the liquid above the pass-through holes is allowed to fall into the pipe segment. Therefore the predetermined maximum level corresponds in this case to the height of the lower point of holes with respect to the bottom of the catchment tub.

Preferably, said tubular extension engages in pass-through manner the bottom wall of said catchment tub and extends upwards inside the same catchment tub to arrange its upper rim at a given height above the bottom of catchment tub.

Preferably, the height of the upper mouth of the tubular extension with respect to the bottom of said catchment tub ranges between 10 and 60 mm.

Preferably, said overflow fitting additionally comprises a drain sump which is located at the base of said tubular extension so as to receive the liquid flowing downwards inside the tubular extension.

Preferably, said drain sump is located on the bottom wall of said catchment tub.

Preferably, said overflow fitting additionally comprises a removable strainer element capable of retaining any relevant solid piece while allowing the liquid to freely pass through it.

Preferably, said removable strainer element is removably fitted into said tubular extension of said overflow fitting.

Moreover, according to the present invention there is also provided an electric grill appliance comprising: a grill structure arranged substantially horizontally to support the foodstuff to be cooked; a heating unit which extends underneath the grill structure and is arranged for heating up the grill structure and the foodstuff resting on it; and a catchment tub which is arranged underneath the heating unit, substantially vertically aligned to the grill structure, so as to collect the liquid tickling down from the grill structure during cooking, said tub being arranged to be at least partially filled with water; said electric grill appliance additionally comprising an overflow fitting which is capable of draining out of said catchment tub the liquid accumulating into the catchment tub and exceeding a predetermined maximum level.

Advantageously the predetermined maximum level is a level below the heating unit.

Advantageously, the overflow fitting avoids that water contained in the catchment tub could cover the heating unit and negatively affect its performances, and therefore ensures high performances of the electric grill appliance.

Preferably, the electric grill appliance comprises a heat-reflecting structure which extends spaced apart underneath the heating unit and is arranged for redirecting, towards the overlying grill structure, the heat radiations emitted by the heating unit; preferably in this case the predetermined maximum level is a level below said heat-reflecting structure. In this case the overflow fitting avoids that water contained in the catchment tub could cover the heat-reflecting structure and negatively affect its performances, and therefore ensures high performances of the electric grill appliance.

Preferably, said overflow fitting comprises a tubular extension which extends substantially vertically inside or beside the catchment tub and moreover communicates with the inside of said catchment tub at a given height above the bottom of said catchment tub, so that solely the liquid above the upper mouth of said tubular extension is allowed to fall into the same tubular extension.

Preferably, said tubular extension engages in pass-through manner the bottom wall of said catchment tub and extends upwards inside the same catchment tub to arrange its upper rim at a given height above the bottom of catchment tub.

Preferably, said overflow fitting additionally comprises a drain sump which is located at the base of said tubular extension so as to receive the liquid flowing downwards inside the tubular extension.

Preferably, said drain sump is located on the bottom wall of said catchment tub.

Preferably, the height of the upper mouth of said tubular extension with respect to the bottom of said catchment tub ranges between 10 and 60 mm.

Preferably, said overflow fitting is also capable of retaining any solid piece having relevant dimensions.

Preferably, said overflow fitting additionally comprises a removable strainer element capable of retaining any relevant solid piece while allowing the liquid to freely pass through it.

Preferably, said removable strainer element is removably fitted into said tubular extension of said overflow fitting.

Preferably, said strainer element is fitted in removable manner into said tubular extension.

The grill structure preferably comprises a number of main longitudinal members which are arranged substantially parallel, juxtaposed and laterally spaced (or laterally separated, not laterally in contact, laterally spaced apart) one another. Moreover, the heating unit preferably comprises a number of oblong heating elements which are arranged substantially parallel, juxtaposed and laterally spaced (or laterally separated, not laterally in contact, laterally spaced apart) one another, beneath and substantially parallel to the main longitudinal members of said grill structure.

Preferably, the electric grill appliance further comprises a heat-reflecting structure which extends spaced apart underneath the heating unit and above the bottom of said catchment tub, and is arranged for redirecting, towards the overlying grill structure, the heat radiations emitted by the heating unit.

Preferably, the heat-reflecting structure comprises a number of heat-reflecting longitudinal members which are arranged substantially parallel, juxtaposed and laterally spaced (or laterally separated, not laterally in contact, laterally spaced apart) one another, beneath and substantially parallel to said oblong heating elements and said main longitudinal members.

Preferably, the catchment tub is designed/dimensioned to at least accommodate the grill structure and the heating unit.

Moreover, according to the present invention there is also provided an electric grill appliance comprising: a grill structure arranged substantially horizontally to support the foodstuff to be cooked; a heating unit which extends underneath the grill structure and is arranged for heating up the grill structure and the foodstuff resting on it; and a catchment tub which is arranged underneath the heating unit, substantially vertically aligned to the grill structure, so as to collect the liquid tickling down from the grill structure during cooking, said tub being arranged to be at least partially filled with water; said electric grill appliance additionally comprising a drain line which is capable of draining out of the catchment tub the liquid accumulating into the catchment tub, and a filtering device which is located along the drain line and is capable of retaining any solid piece having relevant dimensions while allowing the liquid to freely flow along the drain line.

Advantageously the filter element comprises a strainer element.

Preferably the strainer element has also the function of a stopper for selectively fluidly separating said catchment tub from the drain sump; advantageously, in this case the strainer element is structured to be positioned in a closed position, in which it prevents liquid from passing from the catchment tub to the drain sump, and in an opened position in which it allows the free outflow of the liquid accumulated into the catchment tub, while retaining at same time any solid piece having prefixed dimensions within the tub.

In a further advantageous embodiment, a dedicated stopper for selectively fluidly separating the tub from the drain sump is provided, in which case the strainer element has only a filtering function, and not a stopping function; this stopper can be advantageously positioned in a closed position, in which it prevents liquid from passing from the catchment tub to the drain sump, and in an opened position in which it allows the free outflow of the liquid accumulated into the catchment tub; the strainer is in this case arranged in such a way that, in the opened position of the stopper, any solid piece having prefixed dimensions contained in the flow of liquid exiting from the catchment tub is trapped by the strainer.

The presence of the filtering device ensures that the drain line is not clogged by solid pieces of food coming from the grill structure, improving the draining performances of the electric grill appliances, and moreover it ensures that these solid pieces of food are not discharged into the environment.

Preferably, said filtering device comprises a removable strainer element which is preferably fitted into a drain sump located on the bottom of the catchment tub; said strainer element is advantageously designed to allow the free outflow of the liquid accumulated into the catchment tub while retaining at same time any solid piece having relevant dimensions.

Preferably, said strainer element is fitted in manually removable manner into the drain sump.

Preferably, the drain sump comprises a cup-shaped body which is firmly attached to the bottom wall of the catchment tub, outside and underneath said catchment tub, with its upper rim fitted in watertight manner into a complementary-shaped pass-through opening formed on the bottom wall of said catchment tub.

Preferably, said strainer element comprises, and more preferably consists in, a substantially basin-shaped, discoidal sieve which is substantially complementary in shape to the upper rim of said cup-shaped body, and is fitted in manually-removable manner into said upper rim.

Preferably, said grill structure comprises a number of main longitudinal members which are arranged substantially parallel, juxtaposed and laterally one another, and said heating unit comprises a number of oblong heating elements which are arranged substantially parallel, juxtaposed and laterally spaced (or laterally separated, not laterally in contact, laterally spaced apart) one another, beneath and substantially parallel to the main longitudinal members of said grill structure.

Preferably, said electric grill appliance additionally comprises a heat-reflecting structure which extends spaced apart underneath the heating unit and above the bottom of said catchment tub, and is capable of redirecting, towards the overlying grill structure, the heat radiations emitted by the heating unit.

Preferably, said heat-reflecting structure comprises a number of heat-reflecting longitudinal members which are arranged substantially parallel, juxtaposed and laterally spaced (or laterally separated, not laterally in contact, laterally spaced apart) one another, beneath and substantially parallel to said oblong heating elements and said main longitudinal members.

Preferably, said catchment tub is designed/dimensioned to at least accommodate the grill structure and the heating unit.

A non-limiting embodiment of the present invention will now be described, by way of example, with reference to the accompanying drawings, in which:
- Figures 1 and 2 are perspective views of an electric grill appliance in accordance with the teachings of the present invention, with parts removed for clarity;
- Figure 3 is a partly exploded perspective view of the electric grill appliance shown in Figure 1, with parts removed for clarity;
- Figure 4 is a sectioned front view of the electric grill appliance shown in Figures 1, 2 and 3, with parts removed for clarity, and with an enlarged detail;
- Figure 5 is a partly exploded enlarged view of a portion of the Figure 4 electric grill appliance, with parts removed for clarity;
- Figure 6 is a sectioned front view of part of an alternative embodiment of the electric grill appliance shown in Figures 1 to 5.

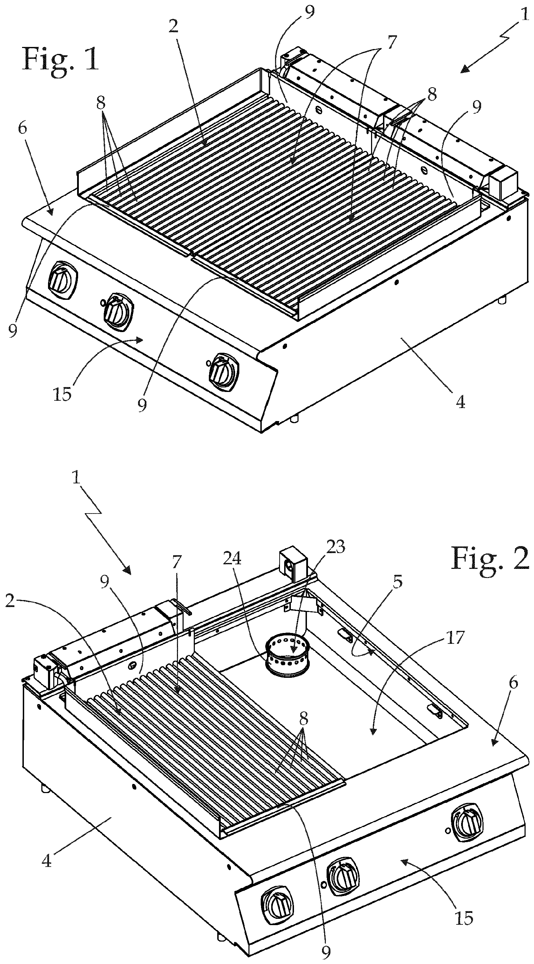

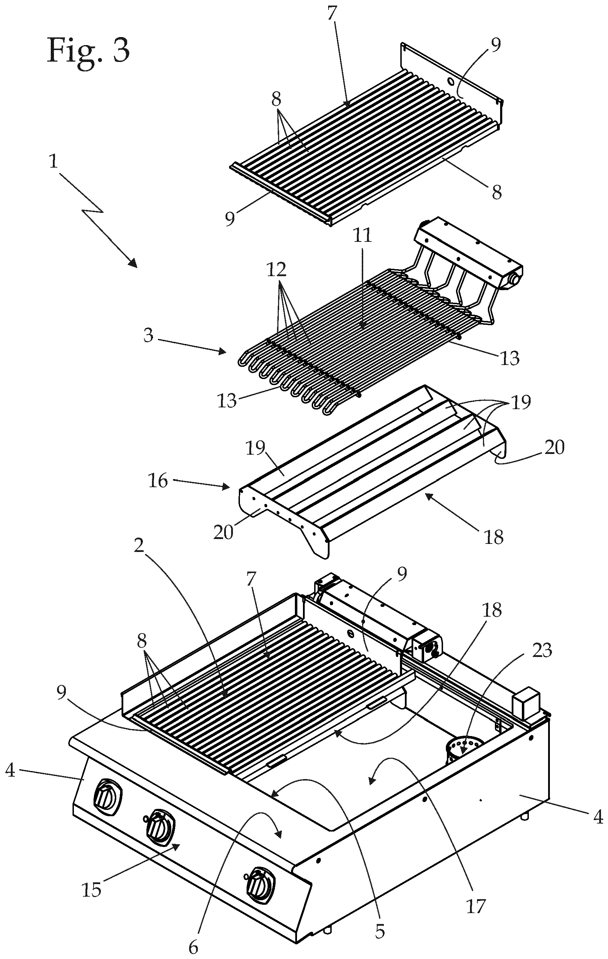

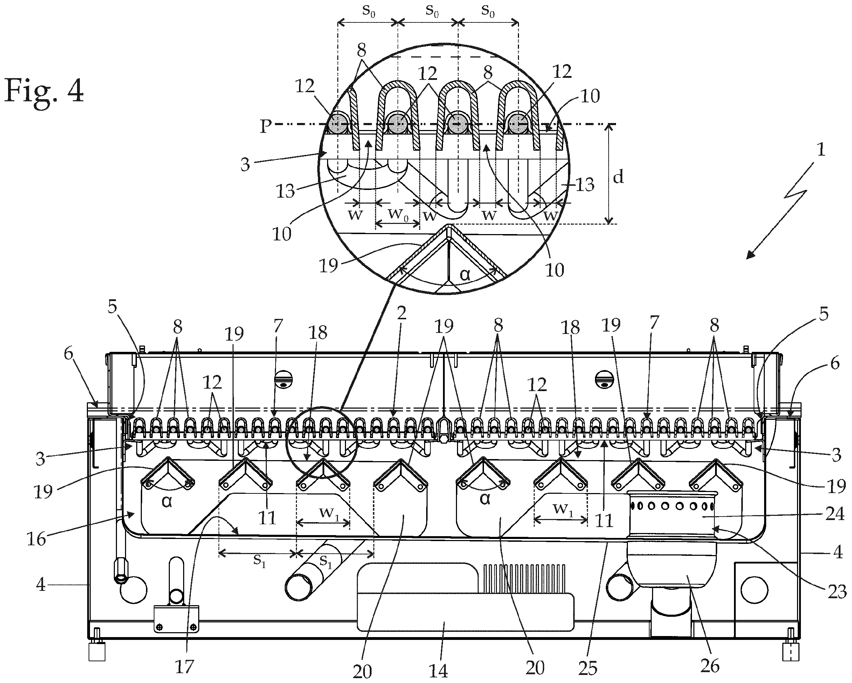

In attached Figures 1, 2, 3, 4 and 5, reference number 1 indicates as a whole an electric grill appliance suitable for grilling meat and other foodstuff.

The electric grill appliance 1 basically comprises: a preferably substantially square or rectangular-shaped grill assembly 2 which is made of metal material, and extends preferably substantially horizontally, so as to directly support the foodstuff to be cooked; and a heating device 3 which extends immediately beneath the grill assembly 2, preferably locally substantially parallel to the laying plane of the grill assembly 2 and preferably substantially for the whole extent of the same grill assembly 2, and is capable of heating up the grill assembly 2 and any foodstuff resting on it.

The electric grill appliance 1 preferably comprises a preferably substantially parallelepiped-shaped, outer boxlike casing 4 which is preferably made of metal material, is preferably structured for resting on a generic worktop, and is preferably designed to accommodate both the grill assembly 2 and the heating device 3.

The grill assembly 2 is preferably arranged substantially horizontally within a preferably substantially complementary-shaped, upper opening 5, preferably formed roughly in the middle of a top wall 6 of the casing 4. The heating device 3, in turn, is preferably housed inside the casing 4, immediately beneath the grill assembly 2.

Preferably, the electric grill appliance 1 furthermore comprises a manually-operable control device (for example one or more knobs, and/or buttons, and/or switches and/or a touchscreen) which is preferably at least partially housed into casing 4, and is capable of selectively activating the heating device 3 preferably while also controlling the heat output towards the overlying grill assembly 2.

The grill assembly 2 preferably comprises two discrete and horizontally adjacent, grill structures 7 which are made of metal material and are preferably coplanar one another.

Each grill structure 7 is preferably fitted, preferably in manually-removable manner, into a corresponding portion of the upper opening 5 of top wall 6, and basically comprises: a series of roughly straight, main longitudinal members 8 (called also simply "longitudinal members") which are preferably substantially ridge-tile shaped and extend locally parallel, juxtaposed and laterally spaced (or laterally separated, not laterally in contact, laterally spaced apart) one another on a substantially horizontally-oriented, common laying plane P, advantageously with their concavity turned downwards, i.e. faced to the beneath-located heating device 3; and preferably at least one transversal crosspiece 9 which is located beside the longitudinal members 8, faced to an axial end of the longitudinal members 8, and rigidly connecting one another the axial ends of the longitudinal members 8.

In the advantageous example shown, each grill structure 7 preferably comprises a pair of reciprocally parallel, transversal crosspieces 9, which are advantageously located on opposite sides of the longitudinal members 8, locally faced to the axial ends of the same members, and which rigidly connect one another the axial ends, respectively, of the longitudinal members 8.

Advantageously, the two crosspieces 9 are preferably substantially coplanar to the longitudinal members 8, and they are preferably rigidly joined respectively to the axial ends of all adjacent longitudinal members 8 so as to form, altogether with the longitudinal members 8, a roughly monolithic, rigid framework. Preferably at least one, and preferably both, connecting crosspieces 9 are structured/designed to rest in abutment on top wall 6, at corresponding side edges of upper opening 5.

Advantageously, each longitudinal member 8 comprises, and preferably consists in, a straight section-bar which has preferably a substantially U-shaped cross-section and has its longitudinal groove turned downwards, i.e. directly faced to the beneath-located heating device 3.

Preferably the length of each longitudinal member 8, i.e. of each U-shaped section-bar 8, ranges between 400 and 600 mm (millimetres).

Preferably each U-shaped section-bar 8 is made of stainless steel, such as for example AISI/SAE 304 steel or AISI/SAE 441.

Similarly, both transversal crosspieces 9 are preferably made of stainless steel, such as for example AISI/SAE 304 steel or AISI/SAE 441. Preferably transversal crosspieces 9 are directly connected, preferably by welding or bolting, to the axial ends of the adjacent U-shaped section-bars 8.

In addition to the above, the longitudinal members 8 of grill assembly 2 are preferably substantially evenly distributed, preferably so that the spacing pitch "so" between two adjacent longitudinal members 8 ranges between 5 and 25 mm (millimetres). The spacing pitch so is in this case defined as the distance between two corresponding points (e.g. between vertical the symmetry planes, if they are vertically symmetric) of two adjacent longitudinal members 8.

Preferably the longitudinal members 8 of grill assembly 2 are furthermore shaped and dimensioned so that the minimum width "w" of the longitudinal slot 10 laterally delimited by the sidewalls of two adjacent longitudinal members 8 preferably ranges between 1 and 15 mm (millimetres). For each couple of adjacent main longitudinal members 8, the minimum width "w" corresponds therefore to their minimum distance.

In the example shown, the minimum width w of each longitudinal slot 10 is preferably equal to roughly 5 mm (millimetres), whereas the maximum width "wo" of each main longitudinal member 8 is preferably greater than twice the width w of the longitudinal slots 10.

Advantageously the heating device 3 preferably comprises two discrete and horizontally adjacent, heating units 11, which are preferably coplanar one another and each of which is preferably arranged immediately below a corresponding grill structure 7 of grill assembly 2. Each heating unit 11 is therefore vertically aligned to a respective grill structure 7 and is capable of heating up the overlying grill structure 7 and any foodstuff resting on it.

The heating unit 11 basically comprises a series of roughly straight oblong heating elements 12 which extend locally parallel, juxtaposed and laterally spaced (or laterally separated, not laterally in contact, laterally spaced apart) one another on a preferably substantially horizontally-oriented, common laying plane, and are moreover substantially parallel to the overlying longitudinal members 8 of grill assembly 2.

Each oblong heating element 12 is advantageously vertically aligned to a respective longitudinal member 8 of grill assembly 2 and preferably extends immediately below a corresponding longitudinal member 8, inside the longitudinal cavity or groove of the same longitudinal member 8, and preferably substantially for the whole length, so that the, preferably substantially ridge-tile shaped, longitudinal member 8 is able to shelter the respective oblong heating element 12.

Preferably each oblong heating element 12 extends inside the longitudinal cavity or groove of a longitudinal member 8 while remaining at a minimum distance from the inner surface of the longitudinal member 8 greater than 0,5 mm (millimetres) and preferably also greater than 1 mm (millimetre).

Preferably each oblong heating element 12 is recessed/housed into the longitudinal cavity of the corresponding longitudinal member 8, i.e. into the longitudinal groove of the U-shaped longitudinal member 8, so that the overlying longitudinal member 8 is capable of sheltering, at same time, the upper side and the two opposite lateral sides of below-located oblong heating element 12.

Advantageously, the oblong heating elements 12 of heating unit 11 are therefore at least partially locally substantially coplanar to the longitudinal members 8 of grill structure 7.

In other words, the oblong heating elements 12 of heating device 3 are preferably substantially evenly distributed on laying plane P.

Moreover the length of each oblong heating element 12 preferably ranges between 300 and 600 mm (millimetres).

Each heating unit 11 of heating device 3 preferably comprises a number of oblong heating elements 12 equal to the number of longitudinal members 8 of the overlying grill structure 7, so that each longitudinal member 8 of grill structure 7 accommodates a respective oblong heating element 12 of heating unit 11.

In other words, each longitudinal member 8 of grill assembly 2 preferably accommodates a respective oblong heating element 12 of heating device 3. In another possible embodiment, one or more of the longitudinal members 8 can be empty, or in other words not provided with a respective oblong heating element 12.

In a preferred embodiment, each oblong heating element 12 of heating unit 11 preferably has a substantially circular cross-section, and preferably extends inside the cavity of the corresponding covering longitudinal member 8, or, in other words, along the longitudinal groove of the substantially U-shaped, straight longitudinal member 8, preferably in such a way to always remain at a minimum distance from the inner surface of the longitudinal member 8, preferably equal to or greater than 1,4 mm (millimetres).

Advantageously, the heating unit 11 of heating device 3 preferably consists in a single coil-shaped resistor 13 which is arranged preferably substantially coplanar to the longitudinal members 8 of grill assembly 2.

Preferably, the heating unit 11 is structured to reach a working temperature ranging between 400 °C and 500 °C.

Preferably, the coil-shaped resistor 13 is provided with a number of reciprocally-parallel straight segments 12 which extend on laying plane P preferably substantially evenly distributed, and are preferably each housed into the longitudinal cavity or groove of a respective longitudinal member 8 of grill assembly 2.

In other words, each oblong heating element 12 of heating unit 11 preferably comprises, and more preferably consists in, a respective straight segment of the coil-shaped resistor 13 that extends substantially coplanar to longitudinal members 8 of the overlying grill structure 7.

Preferably the length of each straight segment 12 is equal to roughly 500 mm (millimetres).

Preferably, the manually-operable control device of electric grill appliance 1 comprises: a power-supply unit 14, which is preferably located inside the casing 4, and is preferably arranged for powering the heating unit 11, preferably while controlling the intensity/amperage of the electric current circulating inside the/each coil-shaped resistor 13; and preferably also a manually-operable control panel 15 which is preferably located on a front wall of casing 4, and preferably controls the power-supply unit 14.

Preferably the electric grill appliance 1 furthermore comprises: a heat-reflecting assembly 16 which extends spaced apart below the heating device 3, inside the casing 4, and is suitably structured to redirect, towards the overlying grill assembly 2, the heat radiations emitted by the heating device 3 in the opposite direction with respect to grill assembly 2; and preferably also a catchment tub 17 which is arranged inside the casing 4, substantially vertically aligned to the grill assembly 2 and below the heat-reflecting assembly 16, so as to collect any liquid tickling down from the grill assembly 2 during cooking. Catchment tub 17 is arranged to be filled with water, for example by an integrated faucet, not illustrated, connected to the water mains, so that any liquid tickling down from the grill structure during cooking fall into the water and is cooled down.

The casing 4 is therefore designed/dimensioned to accommodate the grill assembly 2, the heating device 3, the heat-reflecting assembly 16 and also the catchment tub 17.

The heat-reflecting assembly 16 is preferably made of metal material, and preferably extends below the heating device 3 preferably substantially for the whole extent of heating device 3 and/or of grill assembly 2, preferably while remaining locally substantially parallel to the laying plane P of the oblong heating elements 12.

The heat-reflecting assembly 16 is furthermore suitably structured to redirect, towards the overlying grill assembly 2, the heat radiations emitted by the oblong heating elements 12 in the opposite direction with respect to grill assembly 2.

The catchment tub 17 is preferably made of metal material and preferably substantially copies the shape of the outer perimeter of the grill assembly 2 and/or of the upper opening 5 of top wall 6, so as to collect any liquid tickling down from the grill assembly 2 during cooking.

The heat-reflecting assembly 16 preferably comprises two discrete and horizontally adjacent, heat-reflecting structures 18 which are preferably coplanar one another, and each of which is preferably vertically aligned to a respective heating unit 11 of heating device 3, vertically spaced apart underneath the same heating unit 11. Each heat-reflecting structure 18 is structured to redirect, towards the overlying grill structure 7, the heat radiations emitted by the oblong heating elements 12 of the overlying heating unit 11 in the opposite direction with respect to the grill structure 7.

Each heat-reflecting structure 18 is preferably structured/designed to rest in abutment on the bottom of catchment tub 17.

In a further advantageous embodiment a single heat-reflecting structure 18 can be provided.

Heat-reflecting structure 18 preferably basically comprises: a series of, preferably roughly straight, heat-reflecting longitudinal members 19, which extend substantially parallel to the overlying oblong heating elements 12 of heating device 3, are preferably spaced above the bottom of catchment tub 17, and are preferably arranged locally parallel, juxtaposed and laterally spaced (or laterally separated, not laterally in contact, laterally spaced apart) one another on a substantially horizontally-oriented, common laying plane which is locally parallel to the laying plane P of the overlying oblong heating elements 12 of heating device 3.

Preferably the heat-reflecting structures 18 comprise a pair of reciprocally parallel, transversal connecting crosspieces 20 which are located on opposite sides of the heat-reflecting longitudinal members 19, faced to the axial ends of the same members, and which rigidly connect the heat-reflecting longitudinal members 19 to one another.

The two connecting crosspieces 20 are preferably structured/designed to rest in abutment directly on the bottom of catchment tub 17.

The two connecting crosspieces 20 are preferably rigidly joined to the axial ends of the adjacent heat-reflecting longitudinal members 19 so as to form, altogether with the same heat-reflecting longitudinal members 19, a roughly monolithic, rigid bridge-shaped framework.

Each heat-reflecting longitudinal member 19 is advantageously vertically aligned to at least a couple of, an preferably to a number (i.e. two or more), horizontally-adjacent oblong heating elements 12 of the overlying heating device 3, and is structured/designed to redirect at least part of the heat radiations arriving from said overlying couple or number of horizontally-adjacent oblong heating elements 12, directly towards the longitudinal slot/s 10 laterally delimited two adjacent longitudinal members 8 of grill assembly 2 sheltering said horizontally-adjacent heating elements 12 of heating device 3, so that said heat radiations can directly reach the foodstuff resting on grill assembly 2.

Each heat-reflecting longitudinal member 19 preferably comprises, and more preferably consists in, a straight section-bar which preferably has a substantially V-shaped cross-section, and extends inside the casing 4 with its longitudinal bend or ridgeline facing the overlying and horizontally-adjacent oblong heating elements 12 of heating device 3, and the longitudinal groove facing the bottom of catchment tub 17.

Preferably, the outer surface of longitudinal members 19 is mirror-finished.

Preferably, the groove angle α between the two side wings/flaps of the V-shaped longitudinal members 19 preferably ranges between 30° and 120° and is preferably, though not necessarily, equal to roughly 95°.

Preferably, the longitudinal members 19 are made of stainless steel, such as for example AISI/SAE 430 steel or AISI/SAE 304 steel.

Similarly, the connecting crosspieces 20 are preferably made of stainless steel, such as for example AISI/SAE 430 steel or AISI/SAE 304 steel, and are preferably directly welded to the axial ends of the adjacent longitudinal members 19.

The heat-reflecting longitudinal members 19 of the heat-reflecting structure 18 are preferably substantially evenly distributed, and are preferably arranged below the oblong heating elements 12 of heating device 3 so that the minimum distance d between each heat-reflecting longitudinal member 19 and the laying plane P of the immediately overlying oblong heating elements 12 preferably ranges between 10 and 200 mm (millimetres).

The distance d between the rectilinear upper bend or ridge of each V-shaped longitudinal member 19 of the heat-reflecting assembly 16 and the laying plane P of the oblong heating elements 12 of heating device 3 is preferably equal to roughly 25 mm (millimetres).

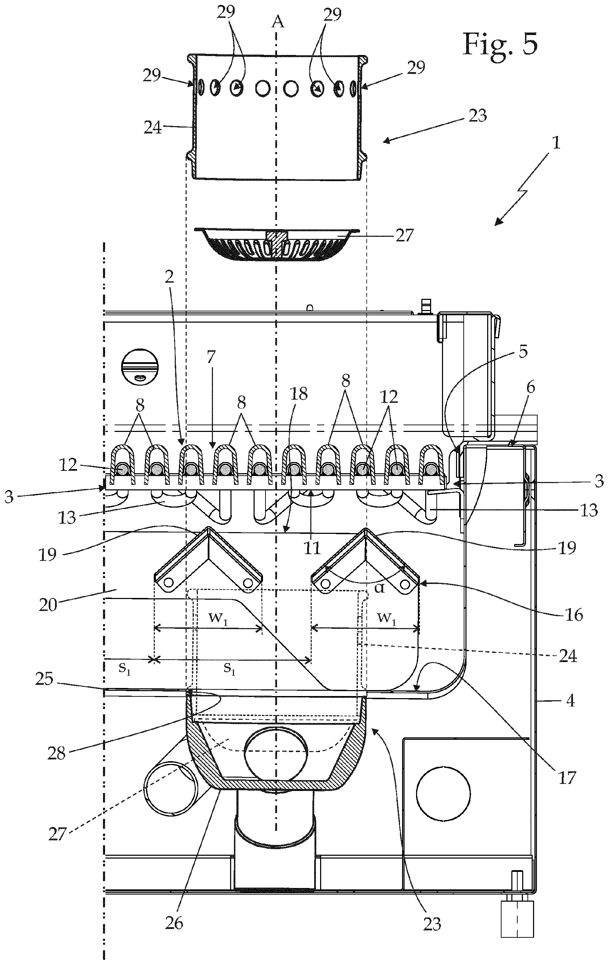

The heat-reflecting longitudinal members 19 of heat-reflecting structure 18 are preferably substantially evenly distributed so that the spacing pitch "si" between adjacent heat-reflecting longitudinal members 19 is four times greater than the spacing pitch so of the covering longitudinal members 8 of grill assembly 2. The spacing pitch si is in this case defined as the distance between two corresponding points (e.g. a point of the left border of the cross section, as in the example of Figure 5) of two adjacent heat-reflecting longitudinal members 19.

Preferably the heat-reflecting longitudinal members 19 of heat-reflecting assembly 16 are shaped and dimensioned so that the maximum width w₁ of each heat-reflecting longitudinal member 19 is preferably at least three times greater than the spacing pitch so of the covering longitudinal members 8 of the grill assembly 2.

Advantageously the catchment tub 17 is preferably designed/dimensioned to accommodate the grill assembly 2, the heating device 3 and the heat-reflecting assembly 16.

The catchment tub 17 is suitably dimensioned so as to substantially copy the shape of the upper opening 5 of top wall 6, and is preferably arranged inside the casing 4 with the upper rim in abutment on top wall 6, at upper opening 5, so as to accommodate the grill assembly 2, the heating device 3 and the heat-reflecting assembly 16, and to collect any liquid tickling down from the grill assembly 2 during cooking.

The catchment tub 17 is preferably made of stainless steel, such as for example AISI/SAE 430 steel or AISI/SAE 304 steel, and is preferably suitably designed/dimensioned to accommodate, at same time, the grill assembly 2, the heating device 3 and the heat-reflecting assembly 16.

The electric grill appliance 1 preferably comprises an drain line which is capable of draining out of catchment tub 17, and preferably towards a generic sewer or waste tank (not shown), the liquid accumulating into the same catchment tub 17 during normal cooking (usually a mixture of water, oil and fat). Said drain line advantageously includes an overflow fitting 23 which is capable of draining out of catchment tub 17 the liquid accumulating into catchment tub 17 during normal cooking and exceeding a predetermined maximum level, preferably while also retaining any solid piece having relevant dimensions.

Advantageously the predetermined maximum level is a level below the heating unit 11.

More preferably the predetermined maximum level is a level below the heat-reflecting structure 16.

The overflow fitting 23 is preferably located on the bottom of catchment tub 17, and is capable of continuously draining out of catchment tub 17 and preferably towards a generic sewer or waste tank (not shown) the amount of liquid that accumulates into catchment tub 17 during cooking and exceeds a predetermined maximum level into catchment tub 17, preferably while also retaining any solid piece having relevant dimensions.

The overflow fitting 23 preferably basically comprises a roughly straight, tubular extension 24 which is preferably made of metal material, and extends substantially vertically inside the catchment tub 17 to arrange its upper mouth at a given height above the bottom of catchment tub 17.

Preferably, but not necessarily, the tubular wall of tubular extension 24 has, preferably close to the upper rim, a number of transversal pass-through holes 29, which are preferably roughly coplanar one another, and are more preferably evenly distributed around the longitudinal axis A of the tubular extension 24. Thus the liquid above the pass-through holes 29 is allowed to fall into the pipe segment 24.Therefore the predetermined maximum level corresponds in this case to the height of the lower point of holes 29 with respect to the bottom of the catchment tub 17.

In another possible embodiment, the holes 29 are not provided, in which case solely the liquid above the upper mouth of the tubular extension 24 is allowed to fall into the same tubular extension 24. In this case, therefore, the predetermined maximum level corresponds to the height of the upper mouth of the tubular extension 24.

The lower mouth of tubular extension 24 preferably communicates with a generic sewer or waste tank (not shown), preferably via a generic hosepipe (not shown).

The overflow fitting 23 preferably comprises a roughly straight, tubular extension 24 which engages in pass-through manner the bottom wall 25 of catchment tub 17 and cantilevered extends upwards inside the catchment tub 17 to arrange its upper rim at a given height above the bottom of catchment tub 17, so that solely the liquid above said upper rim is allowed to fall into the same tubular extension 24.

The overflow fitting 23 preferably comprises a drain sump 26 which is located at the base of tubular extension 24 so as to receive the liquid flowing downwards inside the tubular extension 24, and which preferably communicates with said generic sewer or waste tank (not shown), preferably via a generic hosepipe (not shown).

Preferably, the upright tubular extension 24 extends upwards inside the catchment tub 17 up to a given height above the bottom of catchment tub 17 preferably, though not necessarily, ranging between 10 and 60 mm (millimetres).

Furthermore the upright tubular extension 24 preferably has a substantially circular cross-section.

In an alternative embodiment, the tubular extension 24 could be at least partially incorporated into a lateral wall of catchment tub 17.

The drain sump 26 can be preferably made of metal material and is preferably located or recessed into the bottom wall 25 of catchment tub 17, at the base of tubular extension 24.

The overflow fitting 23 preferably comprises a strainer element 27.

The strainer element 27 is preferably made of metal material.

The strainer element 27 is preferably fitted into the tubular extension 24 in manually detachable manner, so as to retain any relevant solid piece while allowing the liquid to freely pass through, and preferably reach the drain sump 26. By manually removing the strainer element 27, it can be cleaned from any relevant solid piece retained by it, and then it can be re-positioned in the tubular extension 24.

The drain sump 26 preferably comprises, and more preferably consists in, a preferably substantially circular, cup-shaped body 26.

Cup-shaped body 26 is preferably made of stainless steel, such as for example AISI/SAE 303 steel or AISI/SAE 304 steel.

Cup-shaped body 26 is preferably firmly attached/coupled to the bottom wall 25 of catchment tub 17, outside and underneath the catchment tub 17, with the upper rim vertically aligned to, and preferably also fitted in watertight manner into a complementary-shaped pass-through opening 28 formed on the bottom wall 25 of catchment tub 17.

The tubular extension 24 preferably comprises, and more preferably consists in, a straight pipe segment 24, which is preferably made of stainless steel, such as for example AISI/SAE 303 steel or AISI/SAE 304 steel, and preferably has a circular cross-section.

The lower rim of pipe segment 24 is preferably complementary in shape to the pass-through opening 28 on bottom wall 25, and is preferably watertight fitted both into the pass-through opening 28 and into the upper rim of cup-shaped body 26, so as to cantilevered extend upwards inside the catchment tub 17, preferably while remaining substantially vertically and locally substantially perpendicular to bottom wall 25 of catchment tub 17.

Preferably, the straight pipe segment 24 extends upwards inside the catchment tub 17 up to a given height above the bottom of catchment tub 17, preferably equal to roughly 40 mm (millimetres).

Preferably, the strainer element 27 comprises, and more preferably consists in, a preferably substantially basin-shaped, discoidal sieve. Preferably, the strainer element 27 is made of stainless steel, such as for example AISI/SAE 430steel or AISI/SAE 304 steel.

Preferably, the strainer element 27 is substantially complementary in shape to the upper rim of cup-shaped body 26, so as to be fitted in manually-removable manner into the pipe segment 24 up to the upper rim of cup-shaped body 26,

The strainer element 27 is preferably dimensioned to stably rest in abutment on an annular step formed into the cup-shaped body 26, at the upper rim of same cup-shaped body 26.

Preferably, the strainer element 27 is dimensioned to retain any piece having a particle-size preferably greater than 3 mm (millimetres).

General operation of the electric grill appliance 1 is easily inferable from the description above, thus no further explanations are required.

The advantages resulting from the new layout of the covering longitudinal members 8 of grill assembly 2, of the oblong heating elements 12 of heating device 3, and of the heat-reflecting longitudinal members 19 of heat-reflecting assembly 16 are highly remarkable.

Experimental tests revealed that the arrangement of each heat-reflecting longitudinal member 19 vertically aligned to two or more horizontally-adjacent oblong heating elements 12 of the overlying heating device 3, which in turn are accommodated into the longitudinal grooves of corresponding longitudinal members 8 of grill assembly 2, allows realizing a highly regular distribution of the heat on the overlying grill assembly 2 with all advantages in cooking that this entail.

Furthermore the presence of the overflow fitting 23 on the bottom of catchment tub 17 avoids, during intensive professional cooking, the users to repeatedly stop cooking and then manually emptying the tub 17 from mixture of water, oil and fat that normally accumulates into the catchment tub 17.

Clearly, changes may be made to the electric grill appliance 1 without, however, departing from the scope of the present invention.

For example, the grill assembly 2 may comprise a single grill structure 7.

The heating device 3 may comprise a single coil-shaped resistor 13. The heat-reflecting assembly 16 may comprise a single heat-reflecting structure 18 comprising a number of reciprocally-parallel heat-reflecting longitudinal members 19 which are parallel to the oblong heating elements 12 of heating device 3 and are juxtaposed and laterally spaced (or laterally separated, not laterally in contact, laterally spaced apart) one another on a substantially horizontally-oriented, common laying plane which is locally parallel to the laying plane P of the overlying oblong heating elements 12 of heating device 3.

According to a further non-shown embodiment, the overflow fitting 23 could be incorporated into a lateral wall of catchment tub 17.

In other words, the tubular extension 24 may be arranged substantially vertically outside and beside the catchment tub 17, and the upper mouth of the tubular extension 24 may communicate with the inside of catchment tub 17 through an opening formed on a lateral wall of catchment tub 17, at a given height above the bottom of catchment tub 17.

Moreover, according to a further possible embodiment, not all the longitudinal members 8 of grill assembly 2 accommodate a respective oblong heating element 12 of heating device 3, i.e. a straight segment 12 of the coil-shaped resistor 13. The heat-reflecting longitudinal members 19 can be in this case vertically aligned each to a couple or number of horizontally-adjacent oblong heating elements 12- Moreover, each of them can be structured/designed to redirect at least part of the heat radiations arriving from the overlying couple or number of horizontally-adjacent oblong heating elements 12, directly towards the longitudinal slots 10 laterally delimited by all the longitudinal members 8 vertically aligned to the same heat-reflecting longitudinal member 19.

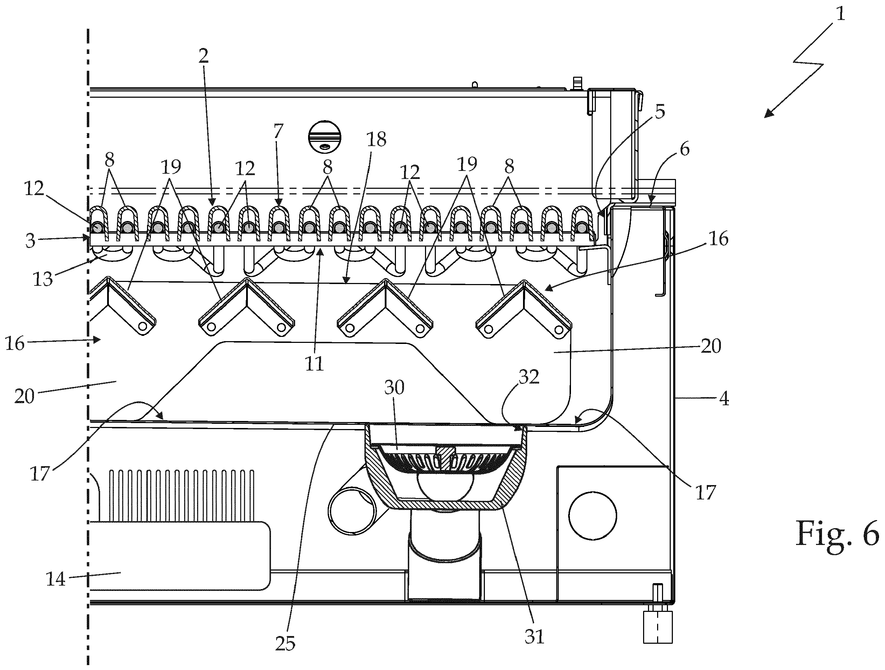

Finally, with particular reference to Figure 6, according to another advantageous embodiment, the drain line of the electric grill appliance 1 comprises, in place of the overflow fitting 23, a filtering member which is located along the drain line and is capable of retaining any solid piece having relevant dimensions while allowing the liquid to freely flow along the drain line.

In this case the electric grill appliance 1 advantageously comprises a strainer element 30 which is fitted into a drain sump 31, which in turn is located on the bottom of catchment tub 17 and preferably communicates with a generic sewer or waste tank (not shown) via a generic hosepipe (not shown). The strainer element 30 has in this case preferably also the function of a stopper for selectively fluidly separating the tub 17 from the drain sump 31; therefore, the strainer element 30 is structured to be positioned in a closed position, in which it prevents liquid from passing from the tub 17 to the drain sump 31, and in an opened position in which it allows the free outflow of the liquid accumulated into the catchment tub 17 while retaining at same time any solid piece having relevant dimensions within the tub 17.

In a further advantageous embodiment, not illustrated, a dedicated stopper for selectively fluidly separating the tub from the drain sump is provided, in which case the strainer element 30 has only a filtering function, and not a stopping function; this dedicated stopper can be advantageously positioned in a closed position, in which it prevents liquid from passing from the catchment tub to the drain sump, and in an opened position in which it allows the free outflow of the liquid accumulated into the catchment tub; the strainer is in this case arranged in such a way that, in the opened position of the stopper, any solid piece having prefixed dimensions contained in the flow of liquid exiting from the catchment tub is trapped by the strainer.

In the example shown in Figure 6, the drain sump 31 preferably comprises, and more preferably consists in, a preferably substantially circular, cup-shaped body 31 which is preferably made of stainless steel, such as for example AISI/SAE 303 steel or AISI/SAE 304 steel, and is firmly attached/coupled to the bottom wall 25 of catchment tub 17, outside and underneath the catchment tub 17, with its upper rim fitted in watertight manner into a complementary-shaped pass-through opening 32 formed on the bottom wall 25 of catchment tub 17.

The strainer element 30 is preferably made of metal material and is preferably fitted in manually removable manner into the upper mouth of the drain sump 31, or better into the upper rim of cup-shaped body 31, so as to retain, in the open position any relevant solid piece immediately upstream of the drain sump 31 while allowing the liquid to freely flow through.

The strainer element 30 preferably comprise, and more preferably consists in, a preferably substantially basin-shaped, discoidal sieve which is preferably made of stainless steel, such as for example AISI/SAE 430 steel or AISI/SAE 304 steel, and is substantially complementary in shape to the upper rim of cup-shaped body 31, so as to be fitted in manually-removable manner into the upper rim of the cup-shaped body 31, preferably in abutment on an annular step formed into the cup-shaped body 31, at the upper rim of same cup-shaped body 31.

Preferably the discoidal sieve 30 is furthermore dimensioned to retain any piece having a particle-size preferably greater than 3 mm (millimetres).

## Claims

1. An electric grill appliance (1) comprising: a grill structure (2, 7) arranged substantially horizontally to support the foodstuff to be cooked; a heating unit (3, 11) which extends underneath the grill structure (2, 7) and is arranged for heating up the grill structure (2, 7); and a liquid catchment tub (17) which is arranged underneath the heating unit (3, 11) so as to collect the liquid tickling down from the grill structure (2, 7) during cooking, said catchment tub (17) being designed to be at last partially filled with water;
the electric grill appliance (1) being **characterized by** additionally comprising an overflow fitting (23) which is capable of draining out of said catchment tub (17) any liquid accumulating into the catchment tub (17) and exceeding a predetermined maximum level.

2. Electric grill appliance according to Claim 1, **characterized in that** said overflow fitting (23) comprises a tubular extension (24) which extends substantially vertically inside or beside the catchment tub (17) and communicates with the inside of said catchment tub (17) at a given height above the bottom of said catchment tub (17), so that solely the liquid above the upper mouth of said tubular extension (24) is allowed to fall into the same tubular extension (24).

3. Electric grill appliance according to Claim 2, **characterized in that** said tubular extension (24) engages in pass-through manner the bottom wall of said catchment tub (17) and extends upwards inside the same catchment tub (17) so that its upper rim is arranged at a given height above the bottom of the catchment tub (17).

4. Electric grill appliance according to Claim 2 or 3, **characterized in that** said overflow fitting (23) additionally comprises a drain sump (26) which is located at the base of said tubular extension (24) so as to receive the liquid flowing downwards inside the tubular extension (24).

5. Electric grill appliance according to Claim 4, **characterized in that** said drain sump (26) is located on the bottom wall of said catchment tub (17).

6. Electric grill appliance according to Claim 5, **characterized in that** the drain sump (26) comprises a cup-shaped body (26) which is firmly attached/coupled to the bottom wall (25) of the catchment tub (17), outside and underneath the catchment tub (17), with the upper rim vertically aligned to a complementary-shaped pass-through opening (28) formed on the bottom wall (25) of the catchment tub (17).

7. Electric grill appliance according to Claim 6, **characterized in that** the tubular extension (24) comprises a straight pipe segment and the lower rim of said straight pipe segment is fitted both into the pass-through opening (28) on the bottom wall (25) of said catchment tub (17) and into the upper rim of said cup-shaped body (26).

8. Electric grill appliance according to any one of Claims 2-7, **characterized in that** the height of the upper mouth of the tubular extension (24) with respect to the bottom of said catchment tub (17) ranges between 10 and 60 mm.

9. Electric grill appliance according to any one of Claims 2-8, **characterized in that** the tubular wall of said tubular extension (24) has, close to the upper rim, one or more transversal pass-through holes (29) that are roughly coplanar to one another, so that the liquid above said pass-through holes (29) is allowed to fall into the pipe segment; the predetermined maximum level corresponding to the height of the lower point of said pass-through holes (29) with respect to the bottom of the catchment tub (17).

10. Electric grill appliance according to any one of the preceding claims, **characterized in that** said overflow fitting (23) is additionally capable of retaining any solid piece having relevant dimensions.

11. Electric grill appliance according to Claim 10, **characterized in that** the overflow fitting (23) comprises a removable strainer element (27) which is capable of retaining any relevant solid piece while allowing the liquid to freely pass through it.

12. Electric grill appliance according to Claim 11, **characterized in that** said strainer element (27) is fitted in removable manner into said tubular extension (24).

13. Electric grill appliance according to any one of the preceding claims, **characterized in that** said predetermined maximum level is a level below the heating unit (3, 11).

14. Electric grill appliance according to any one of the preceding claims, further comprising a heat-reflecting structure (16, 18) which extends spaced apart underneath the heating unit (3, 11) and is arranged for redirecting, towards the overlying grill structure (2, 7), the heat radiations emitted by the heating unit (3, 11); the catchment tub (17) being located below said heat-reflecting structure (16).

15. Electric grill appliance according to Claim 14, **characterized in that** said predetermined maximum level is a level below said heat-reflecting structure (16, 18).
